(19) Europäisches Patentamt / European Patent Office / Office européen des brevets

(11) **EP 4 014 013 B1**

(12) **EUROPÄISCHE PATENTSCHRIFT**


(45) Veröffentlichungstag und Bekanntmachung des Hinweises auf die Patenterteilung:
**04.09.2024 Patentblatt 2024/36**

(21) Anmeldenummer: **20739657.3**

(22) Anmeldetag: **10.07.2020**

(51) Internationale Patentklassifikation (IPC):
***G01F 1/84*** *(2006.01)* ***G01F 15/02*** *(2006.01)*
***G01N 9/00*** *(2006.01)*

(52) Gemeinsame Patentklassifikation (CPC):
**G01F 15/02; G01F 1/8422; G01F 1/8427; G01F 1/8436; G01N 9/002;** G01N 2009/006

(86) Internationale Anmeldenummer:
**PCT/EP2020/069526**

(87) Internationale Veröffentlichungsnummer:
**WO 2021/032359 (25.02.2021 Gazette 2021/08)**


(54) **VERFAHREN ZUR BERECHNUNG EINER QUALITÄT EINES MESSROHRS EINES CORIOLIS-MESSGERÄTS UND EIN SOLCHES MESSGERÄT**

METHOD FOR CALCULATING A QUALITY OF A MEASURING TUBE OF A CORIOLIS MEASURING DEVICE AND SUCH A MEASURING DEVICE

PROCÉDÉ DE CALCUL D’UNE QUALITÉ D’UN TUBE DE MESURE D’UN DISPOSITIF DE MESURE DE CORIOLIS, ET DISPOSITIF DE MESURE ASSOCIÉ


(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2019 DE 102019122094**

(43) Veröffentlichungstag der Anmeldung:
**22.06.2022 Patentblatt 2022/25**



(73) Patentinhaber: **Endress + Hauser Flowtec AG**
**4153 Reinach (CH)**

(72) Erfinder:
- **RIEDER, Alfred**
  **84032 Landshut (DE)**
- **ANKLIN, Martin Josef**
  **4143 Dornach (CH)**
- **RAMSEYER, Severin**
  **4142 Münchenstein (CH)**
- **SCHWENTER, Benjamin**
  **4226 Breitenbach (CH)**
- **SCHERRER, Marco Oliver**
  **4132 Muttenz (CH)**
- **POHL, Johan**
  **79110 Freiburg (DE)**
- **BUTZBACH, Dirk**
  **68330 Huningue (FR)**

(74) Vertreter: **Hahn, Christian**
**Endress+Hauser Group Services (Deutschland)AG +Co. KG**
**Colmarer Straße 6**
**79576 Weil am Rhein (DE)**



(56) Entgegenhaltungen:

| | |
|---|---|
| **WO-A1-2012/115639** | **WO-A1-2018/185403** |
| **WO-A2-2007/045539** | **DE-A1- 102009 002 942** |
| **DE-A1- 102015 100 573** | **US-B2- 7 136 777** |
| **US-B2- 9 170 143** | **US-B2- 9 857 279** |

- **ASAAD KENBAR: "CORIOLIS FLOW METERS - CALIBRATION APPROACH FOR CRYOGENIC APPLICATIONS", 1 October 2013 (2013-10-01), XP055591785, Retrieved from the Internet <URL:https://lngmetrology.info/wp-content/uploads/2015/04/07Calibration_task-133_Rev_0-13.pdf> [retrieved on 20190524]**
- **J. RUOFF ET AL: "Advances in Signal Acquisition and Signal Processing of Coriolis Flow Meters", PROCEDIA ENGINEERING, vol. 87, 2014, NL, pages 1585 - 1588, XP055734751, ISSN: 1877-7058, DOI: 10.1016/j.proeng.2014.11.535**



Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zur Berechnung einer Qualität eines Messrohrs eines Coriolis-Messgeräts im Hinblick auf Abnutzung bzw. Belagsbildung und ein solches Messgerät.

Die WO2010127951A1 oder DE 10 2009 002942 A1 offenbart ein Verfahren und Coriolis-Messgerät, wobei eine aktuelle Schwingungseigenschaft eines Messrohrs in eine Standardschwingungseigenschaft rückgerechnet, und daraus eine aktuelle Wandstärke des Messrohrs bestimmt wird. Auf diese Weise kann beispielsweise eine Abnutzung des Messrohrs festgestellt werden. Das Rückrechnen erfordert ein Berücksichtigen verschiedener Einflüsse. Im Stand der Technik ist es bekannt, dass folgende Größen relevant sind: Medientemperatur, Trägerkörpertemperatur, Gehäusetemperatur und auch eine Mediendichte. Der Fachmann entnimmt dieser Schrift des Weiteren physikalische Grundkenntnisse im Hinblick auf Schwingungstheorie von Messrohren von Coriolis-Messgeräten. Es hat sich jedoch gezeigt, dass ein Rückrechnen gemäß dem Stand der Technik hohen Ansprüchen nur unzureichend genügt und insbesondere eine Abnutzung erst spät erkannt und eher qualitativ ermittelt werden kann.

Aufgabe der Erfindung ist es daher, eine Messrohrqualität so zu ermitteln, dass diese Ermittlung auch hohen Ansprüchen genügt.

Die Aufgabe wird gelöst durch ein Verfahren gemäß dem unabhängigen Anspruch 1 sowie durch ein Coriolis-Messgerät gemäß dem unabhängigen Anspruch 12.

Bei einem erfindungsgemäßen Verfahren zur Berechnung einer Qualität betreffend mindestens ein Messrohr eines Coriolis-Messgeräts zum Messen einer Dichte oder eines Massedurchflusses eines durch das Messrohr strömenden Mediums,

wobei das Coriolis-Messgerät folgendes aufweist:

> ein Schwingungssystem mit mindestens einem Messrohr zum Führen des Mediums, mindestens einen Erreger eingerichtet zum Erregen von Messrohrschwingungen und mindestens zwei Sensoren zum Erfassen der Messrohrschwingungen, wobei der Erreger und/oder die Sensoren jeweils mindestens eine Magnetvorrichtung mit einem Permanentmagnet und eine Spulenvorrichtung aufweisen einen Trägerkörper zum Tragen des mindestens einen Messrohrs,
> eine elektronische Mess-/Betriebsschaltung eingerichtet zum Betreiben des Erregers sowie eingerichtet zum Bereitstellen von Messwerten der Dichte und/oder des Massedurchflusses sowie zum Durchführen des Verfahrens,
> ein Elektronikgehäuse, in welchem die elektronische Mess-/Betriebsschaltung angeordnet ist, weist das Verfahren zumindest folgende Schritte auf:
> in Bezug setzen mindestens einer Anregungseingangsgröße des mindestens einen Erregers zu mindestens einer Ausgangsgröße mindestens eines Sensors, wobei die Anregungseingangsgröße eine Anregungskraft ist,
> Ermitteln einer aktuellen Schwingungseigenschaft des Schwingungssystems auf Basis eines Schwingungsmodells des Messrohrs und des Bezugs,
> Ermitteln einer Standardschwingungseigenschaft des Messrohrs unter Standardbedingungen aus der aktuellen Schwingungseigenschaft des Schwingungssystems, wobei die aktuelle Schwingungseigenschaft eine aktuelle modale Steifigkeit ist, und wobei die Standardschwingungseigenschaft eine modale Steifigkeit zu Standardbedingungen ist,
> dass bei zumindest einem der Verfahrensschritte zumindest eine der folgenden Größen herangezogen wird:
> zumindest eine akkumulierte Zeit, über welche das Magnetvorrichtung einer Temperatur oberhalb einer jeweiligen Schwelltemperatur ausgesetzt ist.

Durch ein erfindungsgemäßes Ermitteln der Standardschwingungseigenschaft ist es möglich, die Standardschwingungseigenschaft eines Messrohrs sehr viel genauer zu ermitteln, da nun subtile Störeinflüsse korrigiert werden.

Ein erhöhter Mediendruck beispielsweise verursacht einen vergrößerten Messrohrdurchmesser, so dass eine Messrohrsteifigkeit verändert wird. Ohne Berücksichtigung des Mediendrucks ist eine Ermittlung der Standardschwingungseigenschaften fehlerhaft.

Es hat sich gezeigt, dass eine Berücksichtigung von Temperaturen gemäß dem Stand der Technik nicht zufriedenstellend ist.

Permanentmagnete von Magnetvorrichtungen sind anfällig für erhöhte Temperaturen, welche eine Verringerung einer Magnetisierung der Permanentmagnete verursachen oder beschleunigen können. Diese Anfälligkeit kann oberhalb von einer Schwelltemperatur stark zunehmen, wobei solche Schwelltemperaturen stark materialabhängig sind. Es können auch mehrere Schwelltemperaturen existieren, bei oberhalb welchen eine Alterung zunimmt. Der Fachmann ist in der Lage solche Schwelltemperaturen eines Permanentmagnets zu bestimmen. Falls ein Permanentmagnet eines Sensors oder Erregers durch erhöhte Temperaturen beeinträchtigt ist, so bewirkt im Falle eines Erregers ein Anregestrom ein kleineres Anregemagnetfeld, was eine kleinere Messrohrschwingungsamplitude zur Folge hat. Im Falle eines Sensors hat eine solche Beeinträchtigung eine geringere Spannungsinduktion einer Messspannung zur Folge. Ohne Berücksichtigung von temperatur- oder auch alterungsbedingten Beeinträchtigungen von Permanentmagneten ist eine Ermittlung der Standardschwingungseigenschaften fehlerhaft.

In einer Ausgestaltung wird bei Heranziehen der Medientemperatur und/oder der Trägerkörpertemperatur und/oder der Gehäusetemperatur ein erster Temperaturkoeffizientensatz oder ein zweiter Temperaturkoeffizientensatz eingesetzt,

wobei der erste Temperaturkoeffizientensatz eingesetzt wird falls die Medientemperatur größer ist als eine Grenztemperatur,

wobei der zweite Temperaturkoeffizientensatz eingesetzt wird falls die Medientemperatur kleiner ist als die Grenztemperatur.

Schwingungseigenschaften des Messrohrs werden von Materialeigenschaften, wie beispielsweise E-Moduln, oder thermische Ausdehnungskoeffizienten des Messrohrs und/oder des Trägerkörpers und/oder des Gehäuses beeinflusst. Der Trägerkörper und/oder das Gehäuse können das Messrohr dabei über Lagerungspunkte beispielsweise über Einspannkräfte beeinflussen. Diese Materialeigenschaften, also beispielsweise das E-Modul sind temperaturabhängig, so dass bei genauen Messgeräten, wie bei einem Coriolis-Messgerät solche Temperaturabhängigkeiten berücksichtigt werden müssen. Üblicherweise geschieht dies mittels mathematischer Modelle, wobei beispielsweise Polynomfunktionen mit entsprechenden Koeffizienten bis zu einer n-ten Ordnung angesetzt werden, wobei n eine natürliche Zahl ist. Das Bestimmen von Koeffizienten wird für größer werdendes n schwieriger und ungenauer. Erfindungsgemäß wird daher ein Betriebstemperaturbereich, in welchem ein Coriolis-Messgerät einsetzbar sein soll in zumindest zwei Bereiche eingeteilt, welche jeweils durch eine Grenztemperatur getrennt sind, und in diesen Bereichen jeweils ein Modell etwas niedrigerer Ordnung mit jeweils eigenen Koeffizienten eingesetzt. Auf diese Weise lässt sich der Aufwand zur Bestimmung von Koeffizienten höherer Ordnung begrenzen.

Eine solche Grenztemperatur kann beispielsweise zwischen -50°C und +50°C, also auch beispielsweise bei 0°C eingerichtet werden. Diese Angaben sind jedoch rein beispielhaft und nicht einschränkend auszulegen.

Diese Vorgehensweise ist dabei nicht auf die Anwendung von Polynomfunktionen beschränkt. Ein Fachmann ist in der Lage, gemäß seinen Bedürfnissen zumindest eine Funktionenfamilie auszuwählen, um ein mathematisches Modell zu erstellen.

Diese Vorgehensweise ist dabei auch nicht auf ein Aufteilen des Betriebstemperaturbereichs in zwei, durch eine Grenztemperatur getrennte Bereiche begrenzt. Der Betriebstemperaturbereich kann auch in mehr als zwei Bereiche aufgeteilt werden, wobei jeweils benachbarte Bereiche durch jeweils eine Grenztemperatur getrennt sind.

In einer Ausgestaltung wird zusätzlich mindestens eine der folgenden Größen zur Berechnung der Standardschwingungseigenschaft herangezogen:

zumindest eine der folgenden Temperaturen: Medientemperatur, Trägerkörpertemperatur, Gehäusetemperatur, Erregertemperatur, Sensortemperatur;

Mediendichte und/oder ein Quadrat der Mediendichte;

Jede der aufgeführten Temperaturen beeinflusst potentiell eine Messung einer Schwingungseigenschaft des Messrohrs. Gehäuse- bzw. Trägerkörpertemperatur bedingen eine Einspannung bzw. Fixierung des Messrohrs, Erreger- bzw. Sensortemperatur bedingen beispielsweise einen ohmschen Widerstand eines Spulensystems und somit eine Effizienz einer Anregung bzw. Erfassung von Messrohrschwingungen.

Die Mediendichte beeinflusst die Gesamtmasse des Schwingungssystems und somit eine Resonanzfrequenz des Schwingungssystems.

In einer Ausgestaltung wird zumindest eine erste akkumulierte Zeit bezüglich einer ersten Schwelltemperatur und eine zweite akkumulierte Zeit bezüglich einer zweiten Schwelltemperatur gemessen und zur Berechnung der Standardschwingungseigenschaft herangezogen. Es ist dabei nicht ausgeschlossen, dass weitere Schwelltemperaturen und weitere akkumulierte Zeiten herangezogen werden. Als Permanentmagnete einsetzbare Materialien können beispielsweise mehrere Schwelltemperaturen aufweisen, bei welchen eine Überschreitung eine Alterung bzw. Beeinträchtigung des Permanentmagnets beispielsweise schneller fortschreitet. Die Schwelltemperaturen sind dabei materialabhängig. Ein Fachmann wird sich daher gezielt über solche Schwelltemperaturen informieren oder diese beispielsweise über Tests ermitteln.

In einer Ausgestaltung ist die mindestens eine akkumulierte Zeit jeweils ein Argument einer nichtlinearen, monotonen, und insbesondere degressiven Funktion, wobei die Funktion beispielsweise mittels einer Logarithmusfunktion oder einer Wurzelfunktion oder einer Exponentialfunktion beschreibbar ist.

In einer Ausgestaltung wird die Medientemperatur und/oder die Trägerkörpertemperatur und/oder die Gehäusetemperatur durch jeweils mindestens einen dafür vorgesehenen Temperatursensor bestimmt.

In einer Ausgestaltung wird bei der Ermittlung der Temperaturkoeffizienten eines Temperaturkoeffizientensatzes Elastizitätsmoduln des Messrohrs bzw. des Trägerkörpers bzw. einer Gehäusewandung des Elektronikgehäuses herangezogen.

In einer Ausgestaltung ist der nichtlineare Beitrag beispielsweise ein quadratischer, logarithmischer, potenzieller oder ein exponentieller Beitrag ist.

In einer Ausgestaltung umfasst das Verfahren folgenden Verfahrensschritt:
Vergleichen der Standardschwingungseigenschaft mit einer Referenzschwingungseigenschaft, welche Referenzschwingungseigenschaft beispielsweise durch eine Werkskalibration oder eine Betriebskalibration unter Standardbedingungen bestimmt wird.

In einer Ausgestaltung umfasst das Verfahren folgenden Verfahrensschritt:

Beobachten einer zeitlichen Entwicklung der Standardschwingungseigenschaft,

Ausgeben einer Warnmeldung falls:

die Standardschwingungseigenschaft eine Mindestabweichung von der Referenzschwingungseigenschaft aufweist,

und/oder ein Betrag einer Änderungsrate der Standardschwingungseigenschaft einen Mindestwert überschreitet.

In einer Ausgestaltung ist die Schwingungseigenschaft eine modale Steifigkeit.

In einer Ausgestaltung wird das Schwingungsmodell mit einem Freiheitsgrad, das bis zur zweiten Ordnung angesetzt wird, gebildet, insbesondere dass das Schwingungsmodell den Bestandteil $\frac{F_D}{X_S} = ah\left|1 + \frac{s}{\omega_0 Q} + \frac{s^2}{\omega_0^2}\right|$ aufweist, wobei

$F_D$ eine von dem mindestens einen Erreger auf das mindestens eine Messrohr ausgeübte Anregungskraft, die die Anregungs-Eingangsgröße bildet,
Xs eine Amplitude der von dem Erreger hervorgerufenen Schwingungen des Schwingungssystems, die eine Ansprechgröße bildet, welche mit der Ausgangsgröße AG des Sensors korreliert, wobei die Korrelation gegebenenfalls von einem Zustand wie beispielsweise ein Alterungszustand eines Permanentmagnets abhängt.
a eine material- und geometrieabhängige Konstante des mindestens einen Messrohres,
h die Rohrwanddicke des mindestens einen Messrohres,
$\omega_0$ eine Resonanzfrequenz des jeweils angeregten Schwingungsmodus,
Q ein Qualitätsfaktor, der das Abklingverhalten der Schwingungen des Schwingungssystems bei einer einmaligen Anregung beschreibt, und
s=i $\omega$, wobei $\omega$ einer Anregungsfrequenz des Schwingungssystems entspricht,
sind und
wobei das Produkt aus a und h ein Maß für die die modale Steifigkeit des mindestens einen Messrohres ist.

Ein erfindungsgemäßes Coriolis-Messgerät eingerichtet zum Ausführen des Verfahrens nach einem der vorigen Ansprüche umfasst:

ein Schwingungssystem mit mindestens einem Messrohr zum Führen des Mediums,

mindestens einen Erreger eingerichtet zum Erregen von Messrohrschwingungen und mindestens zwei Sensoren zum Erfassen der Messrohrschwingungen, wobei der Erreger und/oder die Sensoren jeweils mindestens eine Magnetvorrichtung mit einem Permanentmagnet und eine Spulenvorrichtung aufweisen,

einen Trägerkörper zum Tragen des mindestens einen Messrohrs,

eine elektronische Mess-/Betriebsschaltung eingerichtet zum Betreiben des Erregers sowie eingerichtet zum Bereitstellen von Messwerten der Dichte und/oder des Massedurchflusses sowie zum Durchführen des Verfahrens,

ein Elektronikgehäuse, in welchem die elektronische Mess-/Betriebsschaltung angeordnet ist.

In einer Ausgestaltung weist das Coriolis-Messgerät mindestens einen Temperatursensor eingerichtet zur Messung zumindest einer der folgenden Temperaturen auf:
Medientemperatur, Trägerkörpertemperatur, Gehäusetemperatur, Erregertemperatur, Sensortemperatur.

Im Folgenden wird die Erfindung anhand von Ausführungsbeispielen beschrieben.

Fig. 1 beschreibt einen Aufbau eines beispielhaften Coriolis-Messgeräts mit einem beispielhaften Coriolis-Messaufnehmer;

Fig. 2 beschreibt den Ablauf eines erfindungsgemäßen Verfahrens;

Fig. 1 skizziert den Aufbau eines beispielhaften erfindungsgemäßen Coriolis-Messgeräts 10 mit einem beispielhaften erfindungsgemäßen Coriolis-Messaufnehmer, wobei der Coriolis-Messaufnehmer ein Schwingungssystem mit zwei Messrohren 11 mit jeweils einem Einlauf und einem Auslauf, einen Trägerkörper 12 zum Tragen der Messrohre, einen Erreger 13, und zwei Sensoren 14 aufweist. Der Erreger ist dazu eingerichtet, die beiden Messrohre senkrecht zu einer jeweils durch die bogenförmig ausgestalteten Messrohre definierten Messrohrlängsebene zum Schwingen anzuregen. Die Sensoren sind dazu eingerichtet, die den Messrohren aufgeprägte Schwingung zu erfassen. Temperatursensoren 17 sind dazu eingerichtet, Temperaturen des Trägerkörpers, der Messrohre (beeinflusst durch eine Medientemperatur), sowie des Trägerkörpers zu erfassen. Auch die Sensoren und der Erreger können mit solchen Temperatursensoren ausgestattet sein. Der Coriolis-Messaufnehmer ist mit einem Elektronikgehäuse 80 des Coriolis-Messgeräts verbunden, welches dazu eingerichtet ist, eine elektronische Mess-/Betriebsschaltung 77 zu behausen, welche Mess-/Betriebsschaltung dazu eingerichtet ist, den Erreger sowie die Sensoren zu betreiben und auf Basis von mittels der Sensoren gemessenen Schwingungseigenschaften des Messrohrs Durchflussmesswerte und/oder Dichtemesswerte zu ermitteln und bereitzustellen. Der Erreger sowie die Sensoren sind mittels elektrischer Verbindungen 19 mit der elektronischen Mess-/Betriebsschaltung verbunden. Die elektrischen Verbindungen 19 können jeweils durch Kabelführungen zusammengefasst sein.

Ein erfindungsgemäßes Coriolis-Messgerät ist nicht auf das Vorhandensein zweier Messrohre beschränkt. So kann die Erfindung bei einem Coriolis-Messgerät mit beliebig vielen Messrohren, beispielsweise auch bei einem Einrohr- oder Vierrohr-Messgerät umgesetzt werden.

Anders als hier gezeigt, können die Messrohre auch gerade ausgestaltet sein und beispielsweise dazu eingerichtet sein laterale oder torsionale Schwingungen durchzuführen.

Bei Betrieb eines solchen Coriolis-Messgeräts sind einige Effekte zu berücksichtigen. So beeinflusst eine Erregereffizienz eine Schwingungsamplitude des Messrohrs, und eine Sensitivität der Sensoren eine Fähigkeit, eine Schwingung des Messrohrs in eine Messgröße umzusetzen, wie beispielsweise eine Messspannung oder einen Messstrom. Häufig wird ein Coriolis-Messgerät vor Inbetriebnahme beispielsweise bei einem Kunden eines Herstellers von Coriolis-Messgeräten unter Standardbedingungen kalibriert und somit unter anderem ein Zusammenhang zwischen einer Erregung von Messrohrschwingungen durch den Erreger und eine Erfassung der Messrohrschwingungen durch die Sensoren dokumentiert. Die Erregereffizienz sowie auch die Sensorsensitivität unterliegen dabei Einflüssen, welche einerseits reversible Änderungen aber auch nichtreversible Änderungen dieser Größen hervorrufen können.

Ein Beispiel eines reversiblen Einflusses ist eine Erhöhung eines ohmschen Widerstands einer Spulenvorrichtung eines Sensors durch eine Temperaturerhöhung der Spulenvorrichtung, was eine verringerte Induktion einer elektrischen Spannung durch einen relativ zur Spulenvorrichtung bewegten Sensormagnet zur Folge hat. Ein Beispiel einer nichtreversiblen Änderung ist eine Alterung des Sensormagnets beispielsweise durch starke Erwärmung. Je nach tatsächlichem Aufbau eines Sensors (es gibt beispielsweise auch optische Sensoren) oder Erregers können entsprechende ähnliche Effekte zum Tragen kommen.

Für genaue Messungen von Massedurchfluss und/oder Dichte sowie für eine Alterungs- bzw. Zustandskontrolle ist somit ein angepasstes Verfahren zum Betreiben des Coriolis-Messgeräts nötig.

Fig. 2 beschreibt den Ablauf eines beispielhaften erfindungsgemäßen Verfahrens zur Berechnung einer Qualität betreffend mindestens ein Messrohr 11.1 eines Coriolis-Messgeräts.

In einem ersten Verfahrensschritt 101 wird mindestens eine Anregungseingangsgröße AEG des mindestens einen Erregers zu mindestens einer Ausgangsgröße AG mindestens eines Sensors in Bezug gesetzt, und

in einem zweiten Verfahrensschritt 102 wird eine aktuelle Schwingungseigenschaft ASE des mindestens einen Messrohrs auf Basis eines Schwingungsmodells des Messrohrs und des Bezugs ermittelt.

In einem dritten Verfahrensschritt 103 wird eine Standardschwingungseigenschaft SSE des Messrohrs unter Standardbedingungen aus der aktuellen Schwingungseigenschaft des Messrohrs ermittelt.

Bei zumindest einem der Verfahrensschritte wird zumindest eine der folgenden Größen herangezogen:

ein nichtlinearer Beitrag zumindest einer der folgenden Temperaturen: Medientemperatur, Trägerkörpertemperatur, Gehäusetemperatur;

ein Mediendruck;

zumindest eine akkumulierte Zeit, über welche die Magnetvorrichtung einer Temperatur oberhalb einer jeweiligen Schwelltemperatur ausgesetzt ist;

eine Medienviskosität.

Durch ein erfindungsgemäßes Ermitteln der Standardschwingungseigenschaft ist es möglich, die Standardschwingungseigenschaft eines Messrohrs sehr viel genauer zu ermitteln, da nun subtile Störeinflüsse korrigiert werden.

Wie in Fig. 2 dargestellt, kann das Verfahren weitere Verfahrensschritte aufweisen.

So umfasst das hier dargestellte Verfahren folgende Verfahrensschritte:

Vergleichen der Standardschwingungseigenschaft mit einer Referenzschwingungseigenschaft in einem vierten Verfahrensschritt 104, welche Referenzschwingungseigenschaft RSE beispielsweise durch eine Werkskalibration oder eine Betriebskalibration unter Standardbedingungen bestimmt wird.

Beobachten einer zeitlichen Entwicklung der Standardschwingungseigenschaft in einem fünften Verfahrensschritt 105,

Ausgeben einer Warnmeldung in einem sechsten Verfahrensschritt 106 falls:

die Standardschwingungseigenschaft SSE eine Mindestabweichung von der Referenzschwingungseigenschaft RSE aufweist,

und/oder ein Betrag einer Änderungsrate der Standardschwingungseigenschaft einen Mindestwert überschreitet.

Auf diese Weise kann dem Kunden eines Herstellers solcher Coriolis-Messgeräte und/oder dem Hersteller eine mangelnde Zuverlässigkeit bzw. ein mangelhafter Messrohrzustand von Messrohren des Coriolis-Messgeräts beispielsweise aufgrund von Abrasion oder Belagsbildung mitgeteilt und für rechtzeitigen Ersatz oder Reinigung gesorgt werden.

Eine Standardschwingungseigenschaft SSE kann also auf eine abstrakte Art und Weise beispielsweise durch folgende Gleichung wiedergegeben werden:

SSE=ASE*K_Temp*K_Dichte*K_Druck*K_Alt*K_Visk,

wobei in den Korrekturtermen K wie oben beschriebenen konstante, lineare und nichtlineare Einflüsse herangezogen werden können. Der Fachmann ist dabei in der Lage, diese Einflüsse bei einem Coriolis-Messgerät zu quantifizieren und entsprechende Koeffizienten für diese Einflüsse zu bestimmen.

Der Korrekturterm K_Temp kann beispielsweise folgendermaßen festgelegt sein:
K_Temp= C1+K1*T_Med+K2*(T_Med)^2 mit T_Med als Medientemperatur, C1 als eine Konstante, K1 ein erster Koeffizient und K2 ein zweiter Koeffizient. Entsprechendes gilt für die Korrekturterme bzgl. der Trägerkörpertemperatur oder der Gehäusetemperatur. Der nichtlineare Term ist hier beispielhaft als quadratisch ausgestaltet, kann aber jede andere gewünschte Form einer Nichtlinearität aufweisen und somit beispielsweise ein logarithmischer, potenzieller oder ein exponentieller Beitrag sein.

Auf ähnliche Weise lassen sich die Korrekturterme mit jeweils eigenen Koeffizienten bzgl. der Größen Dichte, Druck Viskosität und Alterung der Permanentmagnete aufstellen. Bei der Alterung der Permanentmagnete kann als degressive Funktion zwecks Beschreibung der Alterung beispielsweise ein Logarithmus oder eine Wurzelfunktion oder eine Exponentialfunktion herangezogen werden, wobei die zumindest eine akkumulierte Zeit, über welche die Magnetvorrichtung einer Temperatur oberhalb einer jeweiligen Schwelltemperatur ausgesetzt ist, als jeweils ein Argument in die Funktion eingeht. Ein Beispiel für eine Beschreibung der Alterung mit einer Funktion mit einer Exponentialfunktion ist folgender Term: C2 - K3*exp(-x*K4+K5) mit x als Variable für die akkumulierte Zeit, C2 eine Konstante und K3 bis K5 als Koeffizienten.

Die hier dargestellte Beschreibung eines Zusammenhangs zwischen SSE und ASE ist rein beispielhaft und nicht einschränkend auszulegen.

**Bezugszeichenliste**

| | |
|---|---|
| 10 | Coriolis-Messgerät |
| 11 | Schwingungssystem |
| 11.1 | Messrohr |
| 12 | Trägerkörper |
| 13 | Erreger |
| 14 | Sensor |
| 15 | Magnetvorrichtung |
| 16 | Spulenvorrichtung |
| 17 | Temperatursensor |
| 19 | elektrische Verbindung |
| 77 | elektronische Mess-/Betriebsschaltung |
| 80 | Elektronikgehäuse |
| 100 | Verfahren |
| 101 - 106 | Verfahrensschritte |
| AEG | Anregungseingangsgröße |
| AG | Ausgangsgröße |
| ASE | aktuelle Schwingungseigenschaft |
| SSE | Standardschwingungseigenschaft |
| RSE | Referenzschwingungseigenschaft |

**Patentansprüche**

1. Verfahren (100) zur Berechnung einer Qualität betreffend mindestens ein Messrohr (11.1) eines Coriolis-Messgeräts (10) zum Messen einer Dichte oder eines Massedurchflusses eines durch das Messrohr strömenden Mediums,
wobei das Coriolis-Messgerät folgendes aufweist:

   ein Schwingungssystem (11) mit mindestens einem Messrohr (11.1) zum Führen des Mediums, mindestens einen Erreger (13) eingerichtet zum Erregen von Messrohrschwingungen und mindestens zwei Sensoren (14) zum Erfassen der Messrohrschwingungen, wobei der Erreger und/oder die Sensoren jeweils mindestens eine Magnetvorrichtung (15) mit einem Permanentmagnet und eine Spulenvorrichtung (16) aufweisen,
   einen Trägerkörper (12) zum Tragen des mindestens einen Messrohrs,
   eine elektronische Mess-/Betriebsschaltung (77) eingerichtet zum Betreiben des Erregers sowie eingerichtet zum Bereitstellen von Messwerten der Dichte und/oder des Massedurchflusses sowie zum Durchführen des Verfahrens,
   ein Elektronikgehäuse (80), in welchem die elektronische Mess-/Betriebsschaltung angeordnet ist,
   wobei das Verfahren (100) zumindest folgende Schritte aufweist:

in Bezug setzen mindestens einer Anregungseingangsgröße (AEG) des mindestens einen Erreger zu mindestens einer Ausgangsgröße (AG) mindestens eines Sensors (101), wobei die Anregungseingangsgröße eine Anregungskraft ist,
Ermitteln einer aktuellen Schwingungseigenschaft (ASE) des Schwingungssystems auf Basis eines Schwingungsmodells des Messrohrs und des Bezugs (102),
Ermitteln einer Standardschwingungseigenschaft (SSE) des Messrohrs unter Standardbedingungen aus der aktuellen Schwingungseigenschaft des Schwingungssystems (103),
wobei die aktuelle Schwingungseigenschaft eine aktuelle modale Steifigkeit ist, und wobei die Standardschwingungseigenschaft eine modale Steifigkeit zu Standardbedingungen ist,
**dadurch gekennzeichnet, dass** bei zumindest einem der Verfahrensschritte zumindest eine der folgenden Größen herangezogen wird:
zumindest eine akkumulierte Zeit, über welche das Magnetsystem einer Temperatur oberhalb einer jeweiligen Schwelltemperatur ausgesetzt ist.

**2.** Verfahren nach Anspruch 1,

wobei bei Heranziehen der Medientemperatur und/oder der Trägerkörpertemperatur und/oder der Gehäusetemperatur ein erster Temperaturkoeffizientensatz oder ein zweiter Temperaturkoeffizientensatz eingesetzt wird,
wobei der erste Temperaturkoeffizientensatz eingesetzt wird falls die Medientemperatur größer ist als eine Grenztemperatur,
wobei der zweite Temperaturkoeffizientensatz eingesetzt wird falls die Medientemperatur kleiner ist als die Grenztemperatur.

**3.** Verfahren nach Anspruch 1 oder 2,

wobei zusätzlich mindestens eine der folgenden Größen zur Berechnung der Standardschwingungseigenschaft herangezogen wird:
zumindest eine der folgenden Temperaturen: Medientemperatur, Trägerkörpertemperatur, Gehäusetemperatur, Erregertemperatur, Sensortemperatur;
Mediendichte und/oder ein Quadrat der Mediendichte.

**4.** Verfahren nach einem der vorigen Ansprüche,

wobei eine erste akkumulierte Zeit bezüglich einer ersten Schwelltemperatur und eine zweite akkumulierte Zeit bezüglich einer zweiten Schwelltemperatur gemessen und zur Berechnung der Standardschwingungseigenschaft herangezogen wird.

**5.** Verfahren nach einem der vorigen Ansprüche,

wobei die mindestens eine akkumulierte Zeit jeweils ein Argument einer nichtlinearen, monotonen, und insbesondere degressiven Funktion ist,
wobei die Funktion beispielsweise mittels einer Logarithmusfunktion oder einer Wurzelfunktion oder einer Exponentialfunktion beschreibbar ist.

**6.** Verfahren nach einem der vorigen Ansprüche, wobei die Medientemperatur und/oder die Trägerkörpertemperatur und/oder die Gehäusetemperatur durch jeweils mindestens einen dafür vorgesehenen Temperatursensor bestimmt wird.

**7.** Verfahren nach einem der Ansprüche 2 bis 6, wobei bei der Ermittlung der Temperaturkoeffizienten eines Temperaturkoeffizientensatzes Elastizitätsmoduln des Messrohrs bzw. des Trägerkörpers bzw. einer Gehäusewandung des Elektronikgehäuses herangezogen wird.

**8.** Verfahren nach einem der vorigen Ansprüche, wobei der nichtlineare Beitrag beispielsweise ein quadratischer, logarithmischer, potenzieller oder ein exponentieller Beitrag ist.

**9.** Verfahren nach einem der vorigen Ansprüche, wobei das Verfahren folgenden Verfahrensschritt umfasst:
Vergleichen der Standardschwingungseigenschaft mit einer Referenzschwingungseigenschaft (104), welche Referenzschwingungseigenschaft (RSE) beispielsweise durch eine Werkskalibration oder eine Betriebskalibration unter Standardbedingungen bestimmt wird.

**10.** Verfahren nach einem der vorigen Ansprüche, wobei das Verfahren folgenden Verfahrensschritte umfasst:
Beobachten einer zeitlichen Entwicklung der Standardschwingungseigenschaft (105) und Ausgeben einer Warnmeldung (106) falls:

die Standardschwingungseigenschaft (SSE) eine Mindestabweichung von der Referenzschwingungseigenschaft (RSE) aufweist,
und/oder ein Betrag einer Änderungsrate der Standardschwingungseigenschaft einen Mindestwert überschreitet.

**11.** Verfahren nach einem der vorigen Ansprüche,

wobei ein Schwingungsmodell mit einem Freiheitsgrad, das bis zur zweiten Ordnung angesetzt wird, gebildet wird,
insbesondere dass das Schwingungsmodell den Bestandteil

$$\frac{F_D}{X_S} = ah\left|1 + \frac{s}{\omega_0 Q} + \frac{s^2}{\omega_0^2}\right|$$

aufweist,
wobei
$F_D$ eine von dem mindestens einen Erreger auf das mindestens eine Messrohr ausgeübte Anregungskraft, die die Anregungs-Eingangsgröße bildet,
Xs eine Amplitude der von dem Erreger hervorgerufenen Schwingungen des Schwingungssystems, die eine Ansprechgröße bildet,
a eine material- und geometrieabhängige Konstante des mindestens einen Messrohres,
h die Rohrwanddicke des mindestens einen Messrohres,
$\omega_0$ eine Resonanzfrequenz des jeweils angeregten Schwingungsmodus,
Q ein Qualitätsfaktor, der das Abklingverhalten der Schwingungen des Schwingungssystems bei einer einmaligen Anregung beschreibt, und
s=i $\omega$, wobei $\omega$ einer Anregungsfrequenz des Schwingungssystems entspricht,
sind und
wobei das Produkt aus a und h ein Maß für die die modale Steifigkeit des mindestens einen Messrohres ist.

**12.** Coriolis-Messgerät (10) eingerichtet zum Ausführen des Verfahren nach einem der vorigen Ansprüche umfassend:

ein Schwingungssystem (11) mit mindestens einem Messrohr (11.1) zum Führen des Mediums,
mindestens einen Erreger (13) eingerichtet zum Erregen von Messrohrschwingungen und mindestens zwei Sensoren (14) zum Erfassen der Messrohrschwingungen, wobei der Erreger und/oder die Sensoren jeweils mindestens eine Magnetvorrichtung (15) mit einem Permanentmagnet und eine Spulenvorrichtung (16) aufweisen,
einen Trägerkörper (12) zum Tragen des mindestens einen Messrohrs,
eine elektronische Mess-/Betriebsschaltung (77) eingerichtet zum Betreiben des Erregers sowie eingerichtet zum Bereitstellen von Messwerten der Dichte und/oder des Massedurchflusses sowie zum Durchführen des Verfahrens,
ein Elektronikgehäuse (80), in welchem die elektronische Mess-/Betriebsschaltung angeordnet ist.

**13.** Coriolis-Messgerät nach Anspruch 12,
wobei das Coriolis-Messgerät (10) mindestens einen Temperatursensor (17) eingerichtet zur Messung zumindest einer der folgenden Temperaturen aufweist:
Medientemperatur, Trägerkörpertemperatur, Gehäusetemperatur, Erregertemperatur, Sensortemperatur.

## Claims

**1.** Method (100) for calculating a quality relating to at least one measuring tube (11.1) of a Coriolis measuring device (10) for measuring a density or a mass flow rate of a medium flowing through the measuring tube,
where the Coriolis meter has the following:

a vibration system (11) with at least one measuring tube (11.1) for guiding the medium,
at least one exciter (13) set up to excite measuring tube oscillations and at least two sensors (14) for detecting the measuring tube oscillations, the exciter and/or the sensors each having at least one magnet device (15) with a permanent magnet and a coil device (16),
a carrier body (12) for carrying the at least one measuring tube,
an electronic measuring/operating circuit (77) arranged to operate the exciter and arranged to provide measured values of the density and/or the mass flow rate and to carry out the method,
an electronics housing (80) in which the electronic measuring/operating circuit is arranged,
wherein the method (100) comprises at least the following steps:

relating at least one excitation input variable (AEG) of the at least one exciter to at least one output variable (AG) of at least one sensor (101), the excitation input variable being an excitation force,
Determination of an actual vibration characteristic (ASE) of the vibration system on the basis of a vibration model of the measuring tube and the reference (102),
Determining a standard vibration characteristic (SSE) of the measuring tube under standard conditions from the current vibration characteristic of the vibration system (103),
wherein the current vibration property is a current modal stiffness, and wherein the standard vibration property is a modal stiffness at standard conditions,

**characterized in that** at least one of the following variables is used in at least one of the process steps:
at least an accumulated time over which the magnet system is exposed to a temperature above a respective threshold temperature.

2. Method according to claim 1,

whereby a first set of temperature coefficients or a second set of temperature coefficients is used when using the medium temperature and/or the carrier body temperature and/or the housing temperature,
where the first set of temperature coefficients is used if the medium temperature is greater than a limit temperature,
where the second set of temperature coefficients is used if the medium temperature is lower than the limit temperature.

3. Method according to claim 1 or 2,
where at least one of the following variables is also used to calculate the standard vibration characteristic:

at least one of the following temperatures: media temperature, carrier body temperature, housing temperature, exciter temperature, sensor temperature;
Media density and/or a square of the media density;

4. A method according to any one of the preceding claims,
wherein a first accumulated time with respect to a first threshold temperature and a second accumulated time with respect to a second threshold temperature are measured and used to calculate the standard vibration characteristic.

5. A method according to any one of the preceding claims,

wherein the at least one accumulated time is in each case an argument of a non-linear, monotonic, and in particular degressive function,
where the function can be described using a logarithm function, a square root function or an exponential function, for example.

6. A method according to any one of the preceding claims,
wherein the media temperature and/or the carrier body temperature and/or the housing temperature is determined by at least one temperature sensor provided for this purpose.

7. The method according to any one of claims 2 to 6, whereby the elastic moduli of the measuring tube or the carrier body or a housing wall of the electronics housing are used to determine the temperature coefficients of a temperature coefficient set.

8. A method according to any one of the preceding claims,
where the non-linear contribution is, for example, a quadratic, logarithmic, potential or exponential contribution.

9. A method according to any one of the preceding claims,
wherein the method comprises the following method step:
Comparing the standard vibration characteristic with a reference vibration characteristic (104), which reference vibration characteristic (RSE) is determined, for example, by a factory calibration or an operating calibration under standard conditions.

10. A method according to any one of the preceding claims,
wherein the method comprises the following method steps:
Observation of a temporal development of the standard oscillation characteristic (105) and output of a warning message (106) if:

the standard vibration characteristic (SSE) has a minimum deviation from the reference vibration characteristic (RSE),
and/or an amount of a rate of change of the standard vibration characteristic exceeds a minimum value.

11. A method according to any one of the preceding claims,

whereby an oscillation model with one degree of freedom, which is applied up to the second order, is formed,
in particular that the vibration model contains the component $\frac{F_D}{X_S} = ah\left|1 + \frac{s}{\omega_0 Q} + \frac{s^2}{\omega_0^2}\right|$,
whereby
$_{FD}$ is an excitation force exerted by the at least one exciter on the at least one measuring tube, which forms the excitation input variable,
$_{XS}$ is an amplitude of the oscillations of the oscillation system caused by the exciter, which forms a response variable,
a is a material and geometry-dependent constant of the at least one measuring tube, h is the tube wall thickness of the at least one measuring

tube,

$\omega_0$ a resonance frequency of the respective excited oscillation mode,

Q is a quality factor that describes the decay behavior of the oscillations of the oscillation system during a single excitation, and

s=i $\omega$, where $\omega$ corresponds to an excitation frequency of the oscillation system,

and

where the product of a and h is a measure of the modal stiffness of the at least one measuring tube,

**12.** A Coriolis measuring device (10) adapted to perform the method according to any one of the preceding claims, comprising:

a vibration system (11) with at least one measuring tube (11.1) for guiding the medium,

at least one exciter (13) set up for exciting measuring tube oscillations and at least two sensors (14) for detecting the measuring tube oscillations, the exciter and/or the sensors each having at least one magnet device (15) with a permanent magnet and a coil device (16),

a carrier body (12) for carrying the at least one measuring tube,

an electronic measuring/operating circuit (77) arranged to operate the exciter and arranged to provide measured values of the density and/or the mass flow rate and to carry out the method,

an electronics housing (80) in which the electronic measuring/operating circuit is arranged,

**13.** Coriolis measuring device according to claim 12, wherein the Coriolis measuring device (10) has at least one temperature sensor (17) set up to measure at least one of the following temperatures:

Media temperature, carrier body temperature, housing temperature, exciter temperature, sensor temperature.

## Revendications

**1.** Procédé (100) de calcul d'une qualité concernant au moins un tube de mesure (11.1) d'un appareil de mesure à effet Coriolis (10) pour mesurer une densité ou un débit massique d'un milieu s'écoulant à travers le tube de mesure,

le dispositif de mesure à effet Coriolis comprenant ce qui suit :

un système vibrant (11) avec au moins un tube de mesure (11.1) pour guider le fluide,

au moins un excitateur (13) aménagé pour exciter des oscillations du tube de mesure et au moins deux capteurs (14) pour détecter les oscillations du tube de mesure, l'excitateur et/ou les capteurs présentant chacun au moins un dispositif magnétique (15) avec un aimant permanent et un dispositif à bobine (16),

un corps de support (12) pour porter le au moins un tube de mesure,

un circuit électronique de mesure/fonctionnement (77) aménagé pour faire fonctionner l'excitateur ainsi qu'aménagé pour fournir des valeurs de mesure de la densité et/ou du débit massique ainsi que pour mettre en oeuvre le procédé,

un boîtier électronique (80) dans lequel est disposé le circuit électronique de mesure/de fonctionnement,

le procédé (100) comprenant au moins les étapes suivantes :

en relation avec au moins une grandeur d'entrée d'excitation (AEG) de l'au moins un excitateur à au moins une grandeur de sortie (AG) d'au moins un capteur (101), la grandeur d'entrée d'excitation étant une force d'excitation,

déterminer une propriété vibratoire actuelle (ASE) du système vibratoire sur la base d'un modèle vibratoire du tube de mesure et de la référence (102),

déterminer une propriété vibratoire standard (SSE) du tube de mesure dans des conditions standard à partir de la propriété vibratoire actuelle du système vibratoire (103),

où la propriété de vibration actuelle est une rigidité modale actuelle, et où la propriété de vibration standard est une rigidité modale aux conditions standard,

**caractérisé en ce que**, dans au moins une des étapes du procédé, on utilise au moins une des grandeurs suivantes :

au moins un temps accumulé pendant lequel le système magnétique est exposé à une température supérieure à une température de seuil respective.

**2.** Procédé selon la revendication 1,

un premier jeu de coefficients de température ou un deuxième jeu de coefficients de température étant utilisé lors de l'utilisation de la température du milieu et/ou de la température du corps de support et/ou de la température du boîtier,

le premier jeu de coefficients de température étant utilisé si la température du fluide est supérieure à une température limite,

le deuxième jeu de coefficients de température étant utilisé si la température du fluide est inférieure à la température limite.

**3.** Procédé selon la revendication 1 ou 2, au moins l'une des grandeurs suivantes étant en outre utilisée pour calculer la propriété d'oscillation standard :

au moins l'une des températures suivantes : température du milieu, température du corps du support, température du boîtier, température de l'excitateur, température du capteur ;
densité du milieu et/ou un carré de la densité du milieu ;

**4.** Procédé selon l'une quelconque des revendications précédentes, dans lequel un premier temps accumulé par rapport à une première température de seuil et un second temps accumulé par rapport à une seconde température de seuil sont mesurés et utilisés pour calculer la caractéristique de vibration standard.

**5.** Procédé selon l'une quelconque des revendications précédentes,

ledit au moins un temps accumulé étant respectivement un argument d'une fonction non linéaire, monotone, et en particulier dégressive,
la fonction pouvant être décrite, par exemple, au moyen d'une fonction logarithmique ou d'une fonction racine carrée ou d'une fonction exponentielle.

**6.** Procédé selon l'une quelconque des revendications précédentes, la température du milieu et/ou la température du corps porteur et/ou la température du boîtier étant déterminées respectivement par au moins un capteur de température prévu à cet effet.

**7.** Procédé selon l'une quelconque des revendications 2 à 6, dans lequel, lors de la détermination des coefficients de température d'un ensemble de coefficients de température, on utilise des modules d'élasticité du tube de mesure ou du corps de support ou d'une paroi de boîtier du boîtier électronique.

**8.** Procédé selon l'une quelconque des revendications précédentes, où la contribution non linéaire est, par exemple, une contribution quadratique, logarithmique, potentielle ou exponentielle.

**9.** Procédé selon l'une quelconque des revendications précédentes, ledit procédé comprenant l'étape de procédé suivante : comparer la caractéristique vibratoire standard à une caractéristique vibratoire de référence (104), laquelle caractéristique vibratoire de référence (RSE) est déterminée par exemple par un étalonnage en usine ou un étalonnage en service dans des conditions standard.

**10.** Procédé selon l'une quelconque des revendications précédentes, le procédé comprenant les étapes suivantes : observer une évolution dans le temps de la propriété d'oscillation standard (105) et émettre un message d'avertissement (106) si :

la propriété vibratoire standard (SSE) présente un écart minimal par rapport à la propriété vibratoire de référence (RSE),
et/ou une amplitude d'un taux de variation de la propriété d'oscillation standard dépasse une valeur minimale.

**11.** Procédé selon l'une quelconque des revendications précédentes,

un modèle d'oscillation avec un degré de liberté, appliqué jusqu'au deuxième ordre, étant formé, en particulier que le modèle vibratoire comprend l'élément

$$\frac{F_D}{X_s} = ah\left|1 + \frac{s}{\omega_0 Q} + \frac{s^2}{\omega_0^2}\right|$$

où
$F_D$ une force d'excitation exercée par le au moins un excitateur sur le au moins un tube de mesure, qui constitue la grandeur d'entrée d'excitation,
$X_S$ une amplitude des oscillations du système vibrant provoquées par l'excitateur, qui constitue une grandeur de réponse,
a est une constante dépendant du matériau et de la géométrie du au moins un tube de mesure,
h est l'épaisseur de la paroi du tube du au moins un tube de mesure,
$\omega_0$ une fréquence de résonance du mode d'oscillation respectivement excité,
Q est un facteur de qualité qui décrit le comportement de décroissance des oscillations du système vibrant lors d'une excitation unique, et
s=i ω, où ω correspond à une fréquence d'excitation du système oscillant, et
le produit de a et h étant une mesure de la rigidité modale dudit au moins un tube de mesure,

**12.** Appareil de mesure à effet Coriolis (10) conçu pour mettre en oeuvre le procédé selon l'une des revendications précédentes, comprenant :

un système vibrant (11) avec au moins un tube de mesure (11.1) pour guider le fluide,
au moins un excitateur (13) aménagé pour exciter des oscillations du tube de mesure et au moins deux capteurs (14) pour détecter les oscillations du tube de mesure, l'excitateur et/ou les capteurs présentant chacun au moins un dispositif magnétique (15) avec un aimant permanent et un dispositif à bobine (16),
un corps de support (12) pour porter le au moins un tube de mesure,
un circuit électronique de mesure/fonctionnement (77) aménagé pour faire fonctionner l'excitateur ainsi qu'aménagé pour fournir des valeurs de mesure de la densité et/ou du débit massique ainsi que pour mettre en oeuvre le procédé,
un boîtier électronique (80) dans lequel est disposé le circuit électronique de mesure/de fonctionnement,

**13.** Appareil de mesure à effet Coriolis selon la revendication 12,
l'appareil de mesure à effet Coriolis (10) présentant au moins un capteur de température (17) conçu pour mesurer au moins l'une des températures suivantes :
Température du fluide, température du corps porteur, température du boîtier, température de l'excitateur, température du capteur.

Fig. 1

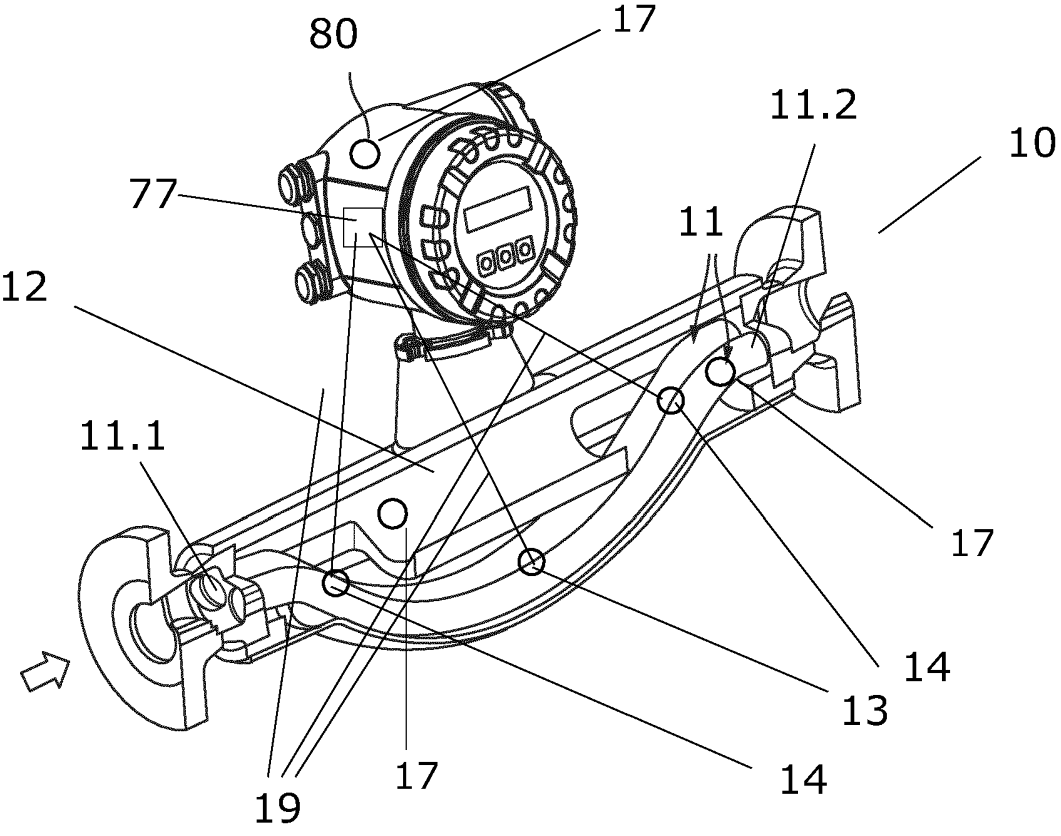

Fig. 2

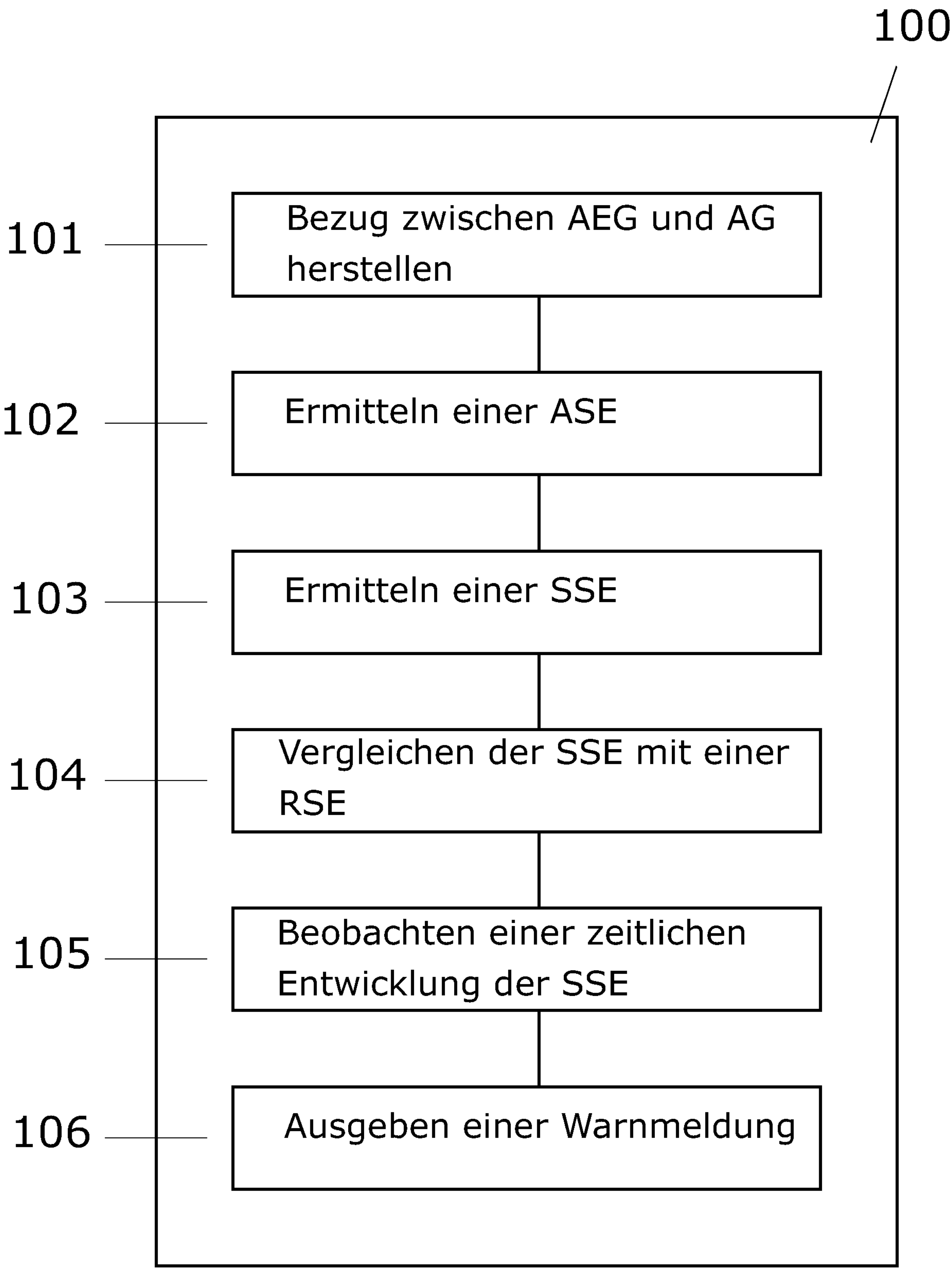
100
101
Bezug zwischen AEG und AG herstellen
102
Ermitteln einer ASE
103
Ermitteln einer SSE
104
Vergleichen der SSE mit einer RSE
105
Beobachten einer zeitlichen Entwicklung der SSE
106
Ausgeben einer Warnmeldung

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2010127951 A1
- DE 102009002942 A1